# EUROPEAN PATENT SPECIFICATION

(11) **EP 2 633 164 B1**
(45) Date of publication and mention of the grant of the patent: **23.01.2019**
(21) Application number: 11836993.3
(22) Date of filing: 26.10.2011
(51) Int. Cl.: F02B 3/04, F02M 26/07, F02B 75/10, F01L 1/34, F02B 33/44, F02D 23/02, F02D 41/40, F02B 23/10, F02D 41/00, F02D 13/02, F02D 41/30

(54) **ENGINE EMPLOYING FULL-TIME LOW-TEMPERATURE PARTIALLY-PREMIXED COMPRESSION IGNITION WITH LOW EMISSIONS**
MOTOR FÜR TEILWEISE VORGEMISCHTE VOLLZEIT-NIEDERTEMPERATUR-KOMPRESSIONSZÜNDUNG MIT NIEDRIGEN EMISSIONEN
MOTEUR À COMBUSTION INTERNE À HAUT RENDEMENT ET PROCÉDÉ POUR SON FONCTIONNEMENT EMPLOYANT UN ALLUMAGE PAR COMPRESSION PARTIELLEMENT PRÉMÉLANGÉ À BASSE TEMPÉRATURE À TEMPS COMPLET AUX FAIBLES ÉMISSIONS

(30) Priority: 26.10.2010 US 406689 P
(43) Date of publication of application: 04.09.2013
(73) Proprietor: Delphi Technologies, Inc., Troy, MI 48007-5052 (US)
(72) Inventor: SELLNAU, Mark, C., Bloomfield Hills MI 48304 (US); HOYER, Kevin, S., Grand Blanc MI 48439 (US); SINNAMON, James, F., Birmingham MI 48009 (US)
(74) Representative: Delphi France SAS
(86) International application number: PCT/US2011/057842
(87) International publication number: WO 2012/058280

(56) References cited:
- EP-A1- 1 586 757
- EP-A1- 1 857 654
- EP-A1- 2 239 446
- EP-A2- 1 835 155
- US-A- 5 232 464
- US-A1- 2005 235 950
- US-A1- 2006 016 417
- US-A1- 2007 272 203
- US-A1- 2009 013 667
- US-B2- 7 150 250
- US-B2- 7 412 967
- US-B2- 7 597 724
- TOMONORI URUSHIHARA, KOJI HIRAYA, AKIHIKO KAKUHOU, TERUYUKI ITOH: "Expansion of HCCI Operating Region by the Combination of Direct Fuel Injection, Negative Valve Overlap and Internal Fuel Reformation. Paper 2003-01-0749.", SAE, no. 2003-01-0749, 31 December 2003 (2003-12-31), XP002733202,
- ARISTOTELES BABAJIMOPOULOS, GERORGE A. LAVOIE , DENNIS N. ASSANIS: "Modeling HCCI Combustion With High Levels of Residual Gas Fraction - A Comparison of Two VVA Strategies. Paper 2003-01-3220", SAE, 30 October 2003 (2003-10-30), XP002733195, Pittsburgh

## Description

### Cross-References To Related Applications

The present application claims the benefit of U.S. Provisional Patent Application No. 61/406,689 filed 26 October 2010.

### Statement Regarding Federally Sponsored Research Or Development

This invention was made with government support under Contract No. DE-EE0003258 awarded by the Department of Energy. The government has certain rights in the invention.

### Background

Near-term regulations (Tier2 Bin 5/Bin 2 and Euro 6) for CAFE, CO₂ emissions and regulated emissions including NOx, CO, HC, and particulate matter (PM) are demanding advanced internal combustion (IC) engines with greatly improved combustion processes. While diesel engines are already very efficient, they are challenged in the US to meet future emissions standards at reasonable cost. Gasoline engines are preferred by customers in the US, but the efficiency of gasoline engines is relatively low. Homogeneous Charge Compression Ignition (HCCI) gasoline engines are dual-mode engines that utilize HCCI mode over a very limited low-load operating range. HCCI involves early injection and mixing of fuel such that subsequent compression of the mixture will cause autoignition near or after top dead center. HCCI is very difficult to control in a practical vehicle application and is subject to misfires and high combustion noise. This requires advanced combustion feedback control including cylinder pressure sensing. While more efficient and lower emissions when in HCCI mode, the net efficiency on a drive cycle is only a few percent better than a stoichiometric SI engine with variable valve actuation. Current HCCI developments include GDi (gasoline direct injection), EGR, and turbocharging to extend load range; however, because HCCI engines require dual mode operation, they are limited by lower compression ratios associated with conventional gasoline engines. HCCI engines will likely see continued technical challenges. New technology is needed to greatly increase the efficiency of gasoline engines while maintaining low emissions and low cost. US2009013667, EP1835155, US2007272203, US 2006 0016417 EP1586757, EP 1 857 654 EP2239446 disclose engines of the prior art.

### Brief Summary Of The Invention

Gasoline Direct Injection Compression Ignition (GDCI) is a new combustion system that overcomes many of the fundamental limitations of other gasoline engines. GDCI provides the high efficiency of conventional diesel engines with unleaded regular gasoline. Compared to diesel fuel, gasoline has much higher volatility and longer ignition delay, which are key enablers to a partially premixed compression ignition combustion process. An important outcome is that gasoline can be injected late on the compression stroke at GDi-like fuel pressure (100 to 500 bar) to achieve a sufficiently premixed charge.

The GDCI engine concept features central-mounted injector, high compression ratios (CR) and lean mixtures for ultra high efficiency. Fuel is injected into a centrally-mounted piston bowl at high cylinder pressure and temperature late on the compression stroke. No fuel is injected during the intake stroke. The fuel and air rapidly mix and compression ignite in a controlled heat release process. As opposed to HCCI engines, the mixture is intentionally stratified. Because the fuel is injected late into a centrally-located piston bowl, no fuel enters the piston topland and very high combustion efficiencies are possible. Because of late injection, no endgas exists, and classic combustion knock is not possible. Classic SI preignition is also not possible. GDCI utilizes low temperature combustion (LTC) to reduce both NOx and PM emissions simultaneously. Cooled exhaust gas recirculation (EGR) dilutes the mixture, increases the ignition delay period, and slows heat release rates for low combustion noise. Due to low charge temperatures, heat transfer during the cycle can be reduced for high cycle efficiency.

In accordance with one embodiment of the invention, an engine control system for controlling a gasoline direct injection internal combustion engine is provided. The engine includes at least one cylinder with direct fuel injection. The engine also includes a piston reciprocally moveable within the cylinder and connected to a crank. A bore wall surface of the cylinder, a top surface of the piston, and a bottom surface of a cylinder head of the engine define a variable volume combustion chamber. The cylinder head includes an intake valve controlling communication with an air intake and an exhaust valve controlling communication with an exhaust outlet. The engine control system includes means for controlling a variable valve actuating system for variably actuating the intake and exhaust valves with respect to the angular position of the crank, to control intake valve closing time and exhaust rebreathing. The engine control system further includes means for controlling exhaust gas recirculation (EGR) means to reintroduce exhaust gas into the combustion chamber, means for controlling intake pressure boost means, and employing fuel injection means capable of multiple injections per combustion cycle to control charge stratification. The method further comprises controlling exhaust rebreathing, EGR, number of fuel injections per combustion cycle, fuel injection timing, and boost pressure as a function of engine speed and load in a manner sufficient to maintain autoignition of the air-fuel mixture in the combustion chamber over essentially the entire speed and load operating range of the engine. As used herein, the term autoignition refers to combustion of the air-fuel mixture initiated spontaneously without requiring an external stimulus (e.g. spark from a spark plug) to initiate combustion.

In another embodiment of the invention, an engine controller for controlling a gasoline direct injection internal combustion engine is provided. The engine includes at least one cylinder with direct fuel injection. The engine also includes a piston reciprocally moveable within the cylinder and connected to a crank. A bore wall surface of the cylinder, a top surface of the piston, and a bottom surface of a cylinder head of the engine define a variable volume combustion chamber. The cylinder head includes an intake valve controlling communication with an air intake and an exhaust valve controlling communication with an exhaust outlet. The engine controller includes an input, an output, and a processor. The input is configured to receive a signal indicative of an engine characteristic. The output is configured to output an engine control signal effective to operate an engine control device and control an engine control parameter. The processor is configured to determine the desired state of the engine control signal based on the input signal. The processor is configured to select appropriate levels of exhaust rebreathing, EGR, number of fuel injections per combustion cycle, fuel injection timing, and boost pressure and to vary engine control signals in a manner sufficient to maintain autoignition of the air-fuel mixture in the combustion chamber over essentially the entire speed and load operating range of the engine.

In yet another embodiment of the invention, a method for operating a gasoline direct injection internal combustion engine is provided. The engine includes at least one cylinder with direct fuel injection. The engine also includes a piston reciprocally moveable within the cylinder and connected to a crank. A bore wall surface of the cylinder, a top surface of the piston, and a bottom surface of a cylinder head of the engine define a variable volume combustion chamber. The cylinder head includes an intake valve controlling communication with an air intake and an exhaust valve controlling communication with an exhaust outlet. The method includes employing a variable valve actuating system for variably actuating the intake and exhaust valves with respect to the angular position of the crank, to control intake valve closing time and exhaust rebreathing. The method further includes employing exhaust gas recirculation (EGR) means to reintroduce exhaust gas into the combustion chamber, employing intake pressure boost means with intake pressure boost means, and employing fuel injection means capable of multiple injections per combustion cycle to control charge stratification. The method further comprises controlling exhaust rebreathing, EGR, number of fuel injections per combustion cycle, fuel injection timing, and boost pressure as a function of engine speed and load in a manner sufficient to maintain autoignition of the air-fuel mixture in the combustion chamber over essentially the entire speed and load operating range of the engine.

### Brief Description Of The Drawings

Fig. 1 is a block diagram of an engine control system in accordance with one embodiment;
Fig. 2 is a graph illustrating parameters associated with fuel injection;
Fig. 3A, 3B,and 3C are illustrations of simulation results of equivalence ratio in the combustion chamber resulting from fuel injections at different crank angles;
Fig. 4 is a graph illustrating parameters associated with the time relationship between fuel injection and combustion;
Fig. 5 is a graph illustrating valve lift profiles associated with embodiments; and
Fig. 6 is a depiction of engine operating regions described by speed, load, and/or temperature.

### Detailed Description Of The Invention

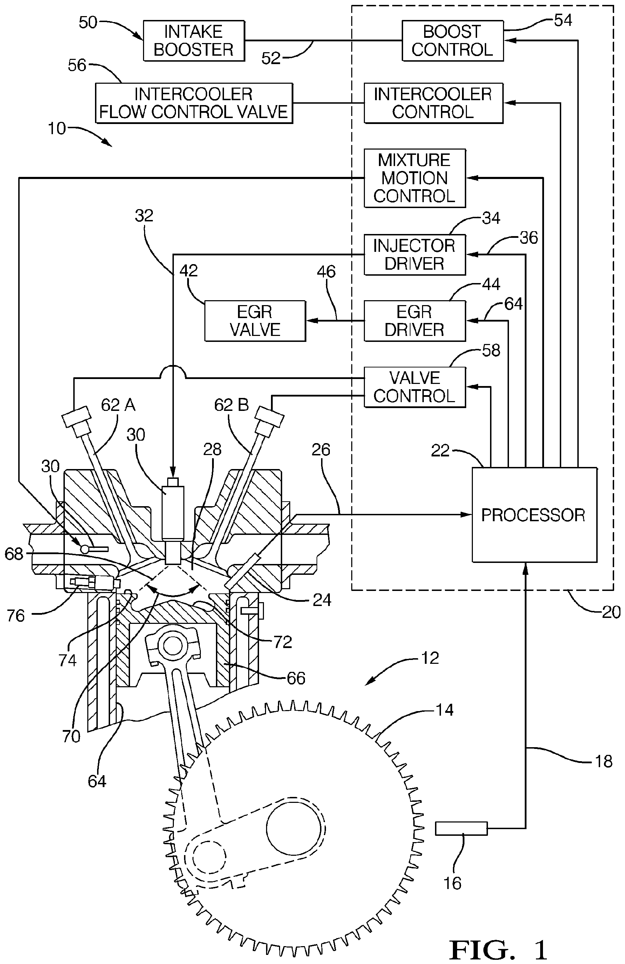

In accordance with an embodiment of an engine control system, Fig. 1 illustrates an engine control system 10 for controlling an internal combustion engine 12 operating at an engine operating condition. The engine 12 is illustrated as having a single cylinder bore 64 containing a piston 66, wherein the region above the piston 66 defines a combustion chamber 28; however it will be appreciated that the system 10 may be adapted to engines having multiple cylinders and combustion chambers. The engine control system 10 may control an engine having multiple combustion chambers by individually controlling each of the multiple combustion chambers, or may control such an engine based on a signal from a sensor that is representative of a typical or average condition in each combustion chamber. The system 10 may include a toothed crank wheel 14 and a crank sensor 16 positioned proximate to the crank wheel 14 such that the crank sensor 16 is able to sense rotational movement of the crank wheel teeth and output a crank signal 18 indicative of a crank angle and a crank speed.

The engine control system 10 may also include a controller 20, such as an engine control module (ECM), configured to determine a crank angle and a crank speed based on the crank signal 18. The controller 20 may include a processor 22 or other control circuitry as should be evident to those in the art. The controller 20 or processor 22 may include memory, including non-volatile memory, such as electrically erasable programmable read-only memory (EEPROM) for storing one or more routines, thresholds and captured data. The one or more routines may be executed by the processor 22 to perform steps for determining a prior engine control parameter and scheduling a future engine control signal such that a future engine control parameter corresponds to a desired engine control parameter. Fig. 1 illustrates the processor 22 and other functional blocks as being part of the controller 20. However, it will be appreciated that it is not required that the processor 22 and other functional blocks be assembled within a single housing, and that they may be distributed about the engine 12.

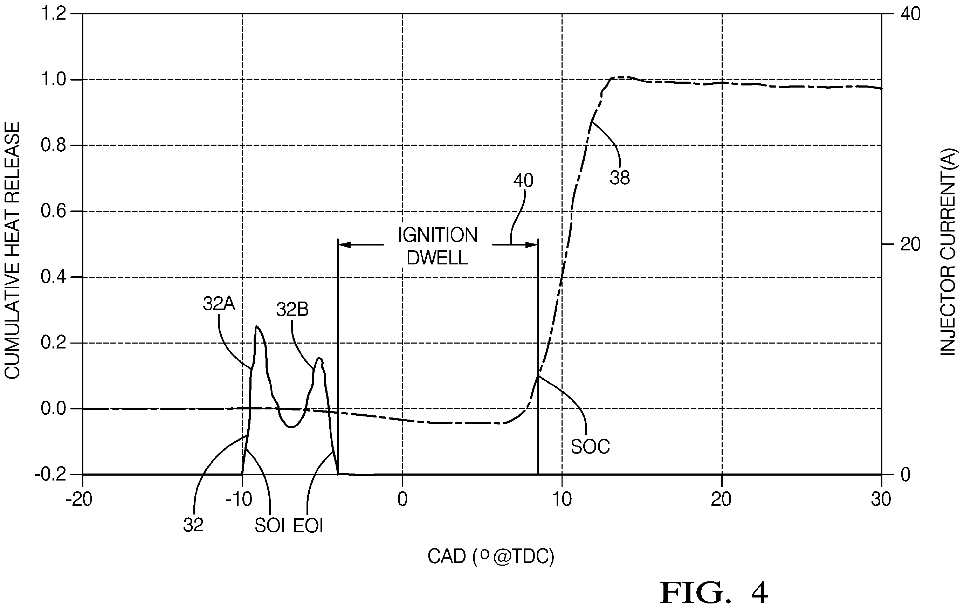

Continuing to refer to Fig. 1, the engine control system 10 may include a combustion phase detection means 24 configured to output a combustion phase signal 26 indicative of a combustion phase characteristic of a combustion event occurring within the combustion chamber 28. One way to monitor the progress of a combustion event is to determine a heat release rate or cumulative heat release for the combustion event, as will be discussed below in relation to Fig. 4. However, because of the number and complexity of measurements, determining heat release may not be suitable for controlling engines during field use such as when engines are operated in vehicles traveling in uncontrolled environments like public roadways. A combustion phase detection means suitable for field use may provide an indication of a combustion phase characteristic that can be correlated to laboratory type measurements such as heat release. Exemplary combustion phase detection means 24 include, but are not limited to, an ionization sensor configured to sense the ionization level of the combustion products in the combustion chamber 28, or a pressure sensor configured to sense the pressure within the combustion chamber 28. Another device that may be useful for indicating some aspect of the combustion process is a combustion knock sensor. The combustion phase detection means 24 may be any one of the exemplary sensors, or a combination of two or more sensors arranged to provide an indication of a combustion phase characteristic. The combustion phase detection means 24 may be incorporated into another device, such as incorporating an ionization sensor or a pressure sensor into a spark plug or a glow plug.

The engine control system 10 includes one or more engine control devices operable to control an engine control parameter in response to an engine control signal, wherein the engine control parameter influences when autoignition occurs. One example of an engine control device is a fuel injector 30 adapted to dispense fuel 68 in accordance with an injector control signal 32 output by an injector driver 34 in response to an injection signal 36 output by the processor 22. The fuel injection profile may include a plurality of injection events. Controllable aspects of the fuel injection profile may include how quickly or slowly the fuel injector 30 is turned on and/or turned off, a fuel rate of fuel 68 dispensed by the fuel injector 30 while the fuel injector 30 is on, or the number of fuel injections dispensed to achieve a combustion event. Varying one or more of these aspects of the fuel injections profile may be effective to control autoignition.

The exemplary engine control system 10 includes an exhaust gas recirculation (EGR) valve 42. While not explicitly shown, it is understood by those familiar with the art of engine control that the EGR valve regulates a rate or amount of engine exhaust gas that is mixed with fresh air being supplied to the engine to dilute the percentage of oxygen and/or nitrogen in the air mixture received into the combustion chamber 28. The controller 20 may include an EGR driver 44 that outputs an EGR control signal 46 to control the position of the EGR valve 42. The EGR driver may, for example, pulse width modulate a voltage to generate an EGR control signal 46 effective to control the EGR valve to regulate the flow rate of exhaust gases received by the engine 12.

Referring again to Fig. 1, the engine control system 10 may include other engine control devices. For example the engine control system 10 may include an intake booster device 50 such as a turbocharger or a supercharger. The intake booster device 50 receives a booster control signal 52 from a boost control block 54 that may control a boost pressure by controlling the position of a waste gate or bypass valve, or controlling a vane position in a variable geometry turbocharger. The engine control system 10 may also include an intercooler flow control valve 56 that regulates the flow of engine coolant through the intercooler for warming the engine intake air when the ambient air temperature is low, thereby controlling the temperature of air received by the engine 12. The engine control system 10 may also include a valve control block 58 that may directly control the actuation of engine intake valve 62A and exhaust valve 62B, or may control the phase of a cam (not shown) actuating the intake valve 62A and/or the exhaust valve 62B.

In order to achieve autoignition of the air-fuel mixture over essentially the entire load-speed range of the engine while achieving acceptable fuel consumption, noise, and emissions results, it has been found advantageous to utilize a late-injection, stratified-mixture, low-temperature combustion process. The method of fuel injection is very important for the success of this process. Fuel 68 is injected by the fuel injector 30 at a pressure in the range of 100 to 500 bar late on the compression stroke using a number of distinct injection events to produce a certain state of controlled air-fuel mixture stratification in the combustion chamber 28. The state of stratification in the combustion chamber 28 controls the time at which autoignition occurs and the rate at which it proceeds. Depending on engine speed and load, single-injection, double-injection, triple-injection, quad-injection, or pent-injection strategies may be used. The quantity and timing of each injection is important and must be optimized for best results. Fuel is injected late on the compression stroke and generally in the range 100 crank angle degrees before top dead center to 10 crank angle degrees after top dead center. If fuel is injected too early, wetting of the cylinder wall 64 and/or the piston 66 may occur and high emissions may result.

Referring again to Fig. 1, the combustion chamber 28 is defined in part by the top surface 74 of the piston 66. The piston 66 is configured so as to define a bowl 72 symmetrically located below the centrally mounted fuel injector 30. The injector is configured to inject fuel 68 over a spray angle 70. The engine 12 may also be equipped with a peripherally located ignition source such as a spark plug 76 to assist with initial engine starting.

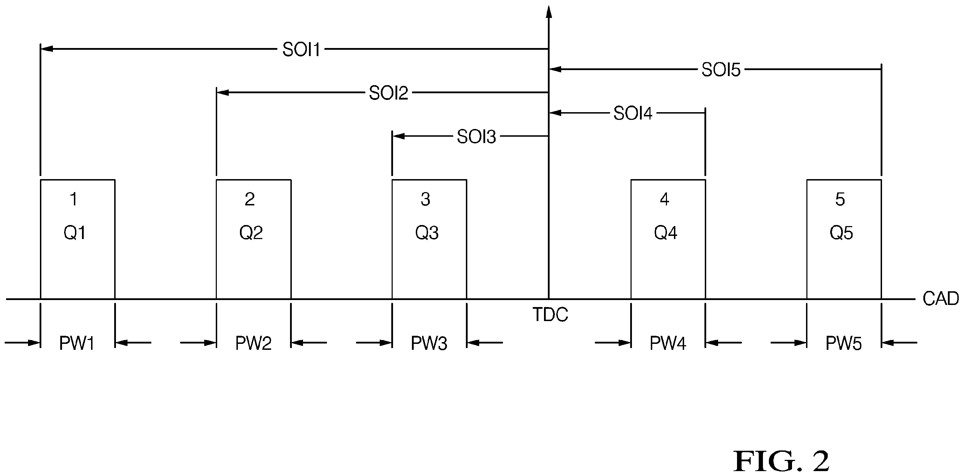

Fig. 2 shows a typical injection event diagram that defines injection quantities and timings for a condition utilizing five injections for a combustion event. In Fig. 2, the injection events indicated as events 1, 2, 3, 4, and 5 correspond to an injector drive signal 36. Injection event 1 has a start of injection time SOI1 relative to the piston top dead center crank position labeled as TDC on the x-axis. Injection event 1 has a commanded pulse width PW1, determined so as to deliver a fuel quantity Q1. Similarly, injection event 2 can be described in terms of its start of injection time SOI2, pulse width PW2, and fuel quantity Q2; injection event 3 can be described in terms of its start of injection time SOI3, pulse width PW3, and fuel quantity Q3; injection event 4 can be described in terms of its start of injection time SOI4, pulse width PW4, and fuel quantity Q4; and injection event 5 can be described in terms of its start of injection time SOI5, pulse width PW5, and fuel quantity Q5.

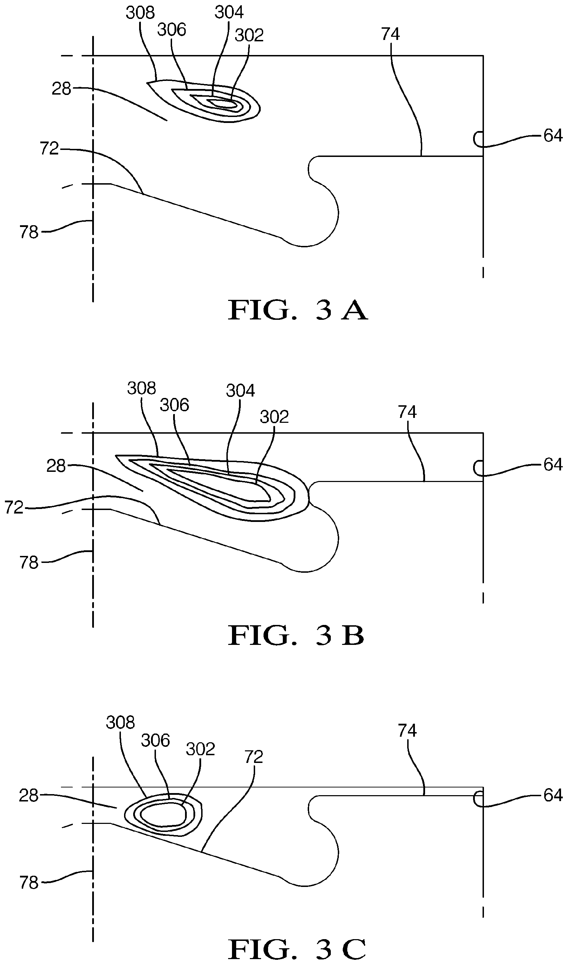

The equivalence ratio Φ of a system is defined as the ratio of fuel-to-air ratio to the stoichiometric fuel-to-air ratio. A value of Φ>1 indicates a rich air-fuel mixture (excess fuel), while a value of Φ <1 indicates a lean air-fuel mixture (excess air). Figs. 3A, 3B, and 3C depict simulation results of distributions of Φ within a combustion chamber 28 resulting from three distinct injections of fuel at different crank angles. In each case, the combustion chamber 28 is defined in part by the cylinder wall 64 and by the top surface 74 of the piston, into which a bowl 72 is defined. Because of the symmetry of the combustion chamber and of the fuel injection spray pattern, it is sufficient to only model a portion of the combustion chamber, with the line 78 at the left side of each of Figs. 3A, 3B, and 3C indicating the axis of symmetry of the cylinder / piston / fuel injector arrangement. The decreasing size of the combustion chamber going from the condition indicated in Fig. 3A to the condition indicated in Fig. 3B is indicative of Fig. 3A representing a crank angle earlier in the compression stroke than the crank angle represented in Fig. 3B. Similarly, Fig. 3C indicates a state later in the compression stroke than the state represented by Fig. 3B.

Figs. 3A, 3B, and 3C additionally include contour lines 302, 304, 306, and 308. Each of the contour lines 302, 304, 306, and 308 indicates a level of constant equivalence ratio Φ, with line 302 corresponding to Φ=2.0; line 304 corresponding to Φ=1.5; line 306 corresponding to Φ=1.0; and line 308 corresponding to Φ=0.5. For clarity, the contour line 304 indicating Φ=1.5 is omitted from Fig. 3C, but it will be appreciated that a level of Φ=1.5 would exist between contour lines 302 (Φ=2.0) and contour line 306 (Φ=1.0) indicated in Fig. 3C. It will be appreciated that the distribution of fuel 68 in the combustion chamber 28 will be influenced by at least the injection pressure, the pressure and temperature in the combustion chamber 28 at the time of the injection (which is a function of the crank angle at the time of injection), and the amount of fuel injected. By controlling the start of injection (SOI) timing and the amount (Q) of fuel injected for each injection event, the intentional stratification of fuel 68 in the combustion chamber 28 can be controlled. By controlling the stratification of fuel 68 in the combustion chamber 28, combustible air-fuel mixtures beyond the boundary of the controlled combustion flame front can be eliminated, thereby preventing combustion knock. This is in contrast with HCCI, wherein the homogeneous nature of the air-fuel mixture in the combustion chamber allows for the possibility of combustion knock.

Fig. 4 illustrates a graph of data occurring about the engine control system 10 during an exemplary combustion event. The injector control signal 32 for an internal combustion event may be indicated by injector current. A start of fuel injection (SOI) and/or end of fuel injection (EOI) for the main pulse may be defined according to an aspect of the injector control signal 32, as illustrated in Fig. 4.

Fig. 4 also illustrates an exemplary normalized cumulative heat release 38 curve indicating a combustion phase characteristic for a combustion event. In general, before combustion begins, such as prior to about 8 degrees after top-dead-center in the example shown in Fig. 4, the cumulative heat release value is about zero (0) since none of the air/fuel charge has burned. After all of the air/fuel charge has burned, for example after 12 crank angle degrees after top dead center in the example shown in Fig. 4, the combustion event has generally completed, and so the normalized cumulative heat release 38 has a value of about 1.0. It has been observed that some devices such as a combustion chamber ionization sensor or a combustion chamber pressure sensor provide a combustion phase signal 26 that is indicative of or corresponds to a state or phase of a combustion event. As such, the controller 20 or the processor 22 may be configured to receive the combustion phase signal 26. The controller 20 or processor 22 may analyze the combustion phase signal 26 to determine a time or crank angle that corresponds to when some combustion phase characteristic occurs.

A non-limiting example of a combustion phase characteristic is when a start of combustion (SOC) is indicated. For example, SOC may be when the combustion process according to heat release data has consumed ten percent (10%) of the air/fuel charge present in the combustion chamber. This SOC generally corresponds to a cumulative normalized heat release of about 0.1. If the combustion phase detection means 24 is an ionization sensor, the combustion phase signal 26 may be compared to a threshold to indicate when a SOC occurs. In one embodiment, the time or crank angle that the ionization level indicated by the ionization current exceeds a threshold may be used to indicate that SOC has occurred. Alternately, if the combustion phase detection means 24 is a pressure sensor, the combustion phase signal 26 may be compared to a threshold and the time or crank angle that the pressure exceeds a threshold may be used to indicate that SOC has occurred. If signals from more than one device are used, the controller 20 or processor 22 may combine or compare the individual signals to determine when the SOC or other combustion phase characteristic has occurred. Either way, it has been observed that a combustion phase signal 26 may be correlated to a combustion phase characteristic, such as the cumulative heat release 38, so that the phase of a combustion event may be tracked by monitoring the combustion phase signal 26.

The time or crank angle between the end of injection and the start of combustion may be defined as the ignition dwell, as indicated in Fig. 4. For a given fuel, the ignition dwell depends on the pressure-temperature-time history, the local air-fuel ratio, and the local burned gas dilution (EGR plus residuals). When fuel is injected early on the compression stroke (e.g. about 120 to 90 crank angle degrees before top dead center), gas temperatures are relatively low and fuel has time to mix with air to a lean state. Because this early fuel is both lean and low temperature, it has relatively long ignition delay. Alternatively, when fuel is injected late on the compression stroke (e.g. 10 to 30 crank angle degrees before top dead center), the gas temperatures and pressures are much higher. This produces much shorter ignition delay with less time for mixing. This late fuel promotes autoignition with greater stratification and with local regions at richer air-fuel ratio. Depending on injection timing and quantity, either early fuel or late fuel may autoignite first.

If fuel from one injection mixes with fuel from an earlier injection, these multiple injections will interact with each other. Depending on injection timing and quantities, the early, middle, or late injected fuel may autoignite at different times within the cycle leading to a distributed heat release profile. This is essential to quiet and clean low-temperature combustion.

Fuel injection and conditions in the cylinder are controlled such that autoignition does not occur too early. This prevents so called "precombustion" of the fuel at undesirable times in the cycle. Precombustion, such as the heat release from pilot injections in a diesel engine, causes negative work and reduces efficiency.

To achieve low NOx and PM emissions with minimum fuel consumption and low combustion noise, start of injection (SOI) and injection quantity (Q) for the injection events (e.g. events 1-5 in Fig. 2) are variably controlled over the speed-load-temperature map in concert with other engine operating parameters. For part load conditions, SOI and Q are generally selected such that start of combustion occurs in the range 5 crank angle degrees before top dead center to 5 crank angle degrees after top dead center, and such that ignition dwell is at a predetermined value (in the nominal range of -5 to 35 crank angle degrees). Start of combustion and ignition dwell are determined from detailed calibration and optimization processes.

To achieve low NOx and PM emissions the fuel-air combustion in GDCI must occur throughout the combustion chamber within a limited range of temperature- Φ conditions. Fuel must be sufficiently mixed prior to attaining autoignition temperature so the combustion process is controlled by the fuel reactivity rather than diffusion or mixing. Proper combustion temperature- Φ conditions enable low enough temperature to avoid NOx formation and lean enough Φ to avoid PM emissions, both which are impossible to avoid with diffusion controlled combustion.

Lower peak temperatures of ideal combustion temperature- Φ mixtures enable lower heat losses to combustion chamber surfaces and lower exhaust gas temperatures which results in higher thermal efficiency and minimum fuel consumption in GDCI.

Low combustion noise is achieved in GDCI when the ignition dwell is sufficiently long and autoignition occurring within the combustion chamber is phased such that the fuel does not all ignite simultaneously. Proper fuel autoignition properties and Φ mixture stratification enables staging of the ignition occurs during a moderate crank angle duration rather than instantaneously and results in a lower peak heat release rate, and lower peak pressure rise rate which is a source of combustion noise.

A typical "gasoline" comprises a mixture of hydrocarbons that boil at atmospheric pressure in the range of about 25 °C to about 225 °C, and that comprise a major amount of a mixture of paraffins, cycloparaffins, olefins, and aromatics, and lesser or minor amounts of additives. Unleaded regular gasoline (RON91) has a relatively high octane index. For compression ignition systems, this translates into long ignition dwell for operating conditions at low loads, low ambient temperatures, or during cold start and early warm-up. Autoignition may fail to occur or may be too weak or too late (i.e., on the expansion stroke). Additional mixture heat is needed for these special conditions.

Compression heating of the mixture from higher compression ratio is helpful. Higher compression ratio significantly increases mixture temperature near top dead center. Use of intake valve closing (IVC) near bottom dead center is also helpful to maximize both volumetric efficiency and effective compression ratio, and provide further mixture heating ("BDC cam"). However, more mixture heat may be needed to insure that autoignition is robust and that start of combustion, ignition dwell, and crank angle of 50 percent mass burn fraction (CA50) are in the proper ranges. Mixture temperature at the end of compression needs to be modulated in concert with the fuel injection process to achieve target start of combustion, ignition dwell, and CA50. If sufficient heat can be obtained, robust compression ignition may be feasible just a few cycles after the first combustion event during a cold start, with an auxiliary ignition source such as spark plug 76 potentially used to initially start a cold engine. Other starting aids, such as glow plugs, may be used without departing from the present invention.

The hot exhaust gas (residuals) from internal combustion engines is one large source of mixture heating that can be controlled very quickly over wide ranges using variable valvetrain mechanisms. Residual gas is preferred to other methods of heating such as intake air heaters, or high-pressure-loop (HPL) EGR that have relatively slow response.

Generally, three variable valve strategies are known to control residual gases in DOHC engines including 1) positive valve overlap (PVO), which causes backflow and reinduction of hot residual gases in the intake port(s), 2) negative valve overlap (NVO), which traps exhaust gases in cylinder by early exhaust valve closing, and 3) rebreathing (RB) of hot exhaust gases from the exhaust port(s) during the intake stroke by a secondary exhaust event.

Due to limited valve-to-piston clearance for engines with higher compression ratio, PVO is not preferred. NVO can be effective to trap hot exhaust gases but has losses associated with recompression of the gases and heat transfer. NVO also requires variable control of both intake and exhaust valves, which is complex and expensive for continuously variable systems.

Rebreathing of hot exhaust gases from the exhaust ports is the preferred strategy. It can be implemented with a secondary exhaust event during the intake stroke. Both "early" secondary valve lift events and "late" secondary valve lift events are considered. In general, "mid-stroke" secondary events are not preferred due to high piston speeds and greater sensitivity to valve opening/closing time at midstroke.

Rebreathing can be implemented using continuously variable valve actuation or discrete 2-step or 3-step exhaust variable valve actuation mechanisms. This leaves the intake valve train available for other variable valve actuation functions, such as late intake valve closing. For 2-step exhaust rebreathing, independent control of the two exhaust valves may be used to control residual gas in 3 levels (one low exhaust lift; one high exhaust lift, both valves open).

Rebreathing is also important during cold starts and warm-up to increase and maintain exhaust temperatures for efficient catalyst operation. Depending on catalyst type, conversion of exhaust species begins to occur at various temperatures (e.g. 200 °C for SCR catalysts). By rebreathing hot exhaust gases from the exhaust ports, intake air flow is reduced and exhaust temperatures increase. In this manner, rebreathing can be controlled during warm-up to promote autoignition and also greatly accelerate catalyst lightoff.

Rebreathing can also be controlled under warm idle and light loads for catalyst maintenance heating. In this case, if catalyst temperatures drop or cool down below a certain threshold, rebreathing can be increased such that catalyst temperature is always maintained. Some adjustment to injection characteristics is expected in maintenance heating mode.

For deceleration conditions, during which fuel is shut off, catalyst cooling from engine air needs to be minimized. Rebreathing can be used at high levels to reduce the air flow rate through the engine and catalyst. Catalyst cooling can be significantly reduced. Some throttling may be needed.

For high load conditions, low amounts of hot residuals are desired for low NOx emissions. This can be achieved by using high geometric compression ratio, for which the cylinder clearance volume is low. When rebreathing is zero, residual gas levels of about 2 percent by mass have been measured for geometric compression ratio of 16.2.

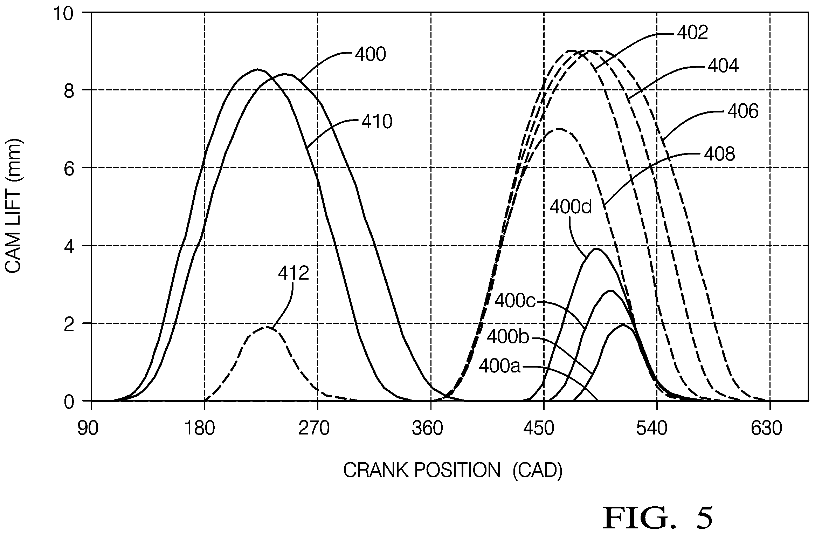

Valve lift profiles illustrating the valve strategies described above are shown in Fig. 5, with solid lines indicating exhaust valve profiles and dashed lines indicating intake valve profiles. The horizontal axis in Fig. 5 represents crank position expressed in crank angle degrees. In Fig. 5, crank angles from 0 to 180 degrees represent a power stroke, with 0 degrees representing top dead center piston position and 180 degrees representing bottom dead center piston position. Crank angles from 180 degrees to 360 degrees represent an exhaust stroke, with 360 degrees representing top dead center piston position. Crank angles from 360 degrees to 540 degrees represent an intake stroke, with the piston at bottom dead center at a crank angle of 540 degrees. Crank angles from 540 degrees to 720 degrees represent a compression stroke, with the piston at top dead center at a crank angle of 720 degrees.

Profile 400 of Fig. 5 indicates a lift profile for an exhaust cam. Lift profile 400a represents an exhaust valve profile with no rebreathing lift during the intake stroke. A number of "late" secondary exhaust profiles 400b, 400c, and 400d to achieve rebreathing of residual gas are shown during the later portion of the intake stroke. Exhaust valve profile 400b will provide a relatively low amount of exhaust rebreathing, with profile 400c providing more rebreathing than profile 400b, and profile 400d providing more rebreathing than profile 400c. "Early" secondary exhaust profiles are equally feasible but are not shown.

Trace 410 in Fig. 5 illustrates an exhaust valve profile incorporating negative valve overlap (NVO). As shown by trace 410, negative valve overlap traps exhaust gases in the cylinder by early exhaust valve closing, i.e. before the piston has reached top dead center on the exhaust stroke.

Trace 412 in Fig. 5 illustrates a positive valve overlap intake valve profile, incorporating a secondary intake event while the exhaust valve is open. This valve state can result in exhaust backflow into the intake port and reintroduction of residual burned gases into the combustion chamber.

For medium-to-high-load operation, cylinder pressure and temperature are increased. This tends to promote early autoignition and may lead to higher NOx emissions and higher combustion noise.

An effective strategy to lower the cylinder pressure and temperature during compression is to reduce the effective compression ratio (ECR) of the engine. The effective compression ratio is defined as the ratio of the volume of the combustion chamber at the time that the intake and exhaust valves close divided by the clearance volume of the combustion chamber at top dead center piston position. The effective compression ratio can be reduced by employing "late intake valve closing" (LIVC). Traces 402, 404, and 406 in Fig. 5 represent intake valve profiles for LIVC. In Fig. 5, trace 402 represents an intake valve profile with a low degree of LIVC, trace 404 indicates an intake valve profile with a moderate degree of LIVC, and trace 406 represents an intake valve profile with a high degree of LIVC.

A "BDC intake cam", which provides effective intake closing near bottom dead center, provides maximum volumetric efficiency and maximum trapped air for GDCI combustion at low engine speeds. This provides the greatest compression pressures and temperatures at light loads. A BDC intake cam profile is shown as profile 408 in Fig. 5.

As engine speed and load increase, the timing of IVC is generally retarded. At high loads, IVC can be retarded significantly. When combined with cooled EGR, low NOx levels can be achieved.

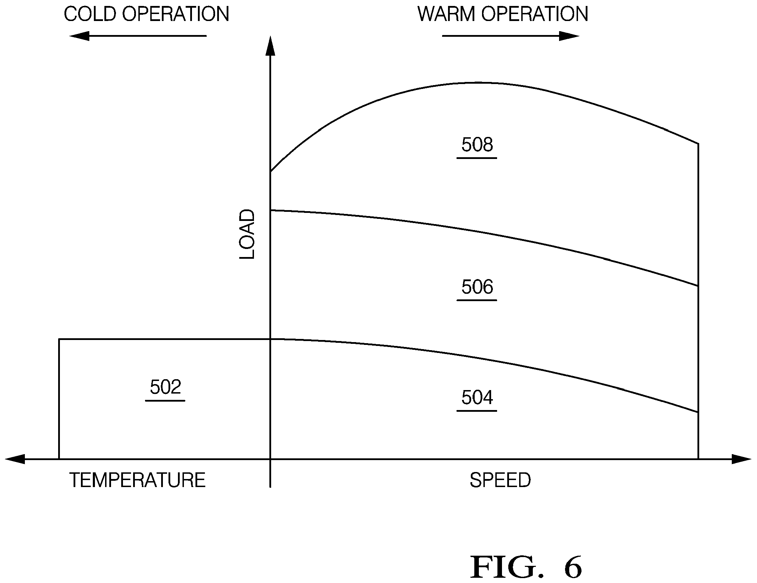

Fig. 6 shows approximate operating regions for cold and warm operation of a GDCI engine. The operating regions shown in Fig. 6 collectively represent the entire load-speed operating range of the engine.

Operating region 502 represents a region used during cold starts and engine warm-up. In region 502, large amounts of residuals are rebreathed for greatly increased mixture temperatures. This level of rebreathing may be achieved, for example, by using an exhaust valve with a lift profile represented by profile 400d in Fig. 5. EGR is low or zero and intake valve closing is effectively at bottom dead center for maximum effective compression ratio. An intake valve lift profile such as shown in trace 408 may be suitable in operating region 502.

Operating region 504 in Fig. 6 represents a low load region. In region 504, moderate exhaust rebreathing is preferred along with moderate EGR. This level of rebreathing may be achieved, for example, by using an exhaust valve with a lift profile represented by profile 400c in Fig. 5. An intake valve lift profile such as shown in trace 408 (BDC cam) or 402 (small LIVC) in Fig. 5 may be suitable for operating in region 504. A double injection strategy is preferred, along with low intake pressure boost. Rebreathing may be used for catalyst maintenance heating.

Operating region 506 in Fig. 6 represents a medium load region. In operating region 506, exhaust rebreathing is minimized. This level of rebreathing may be achieved, for example, by using an exhaust valve with a lift profile represented by profile 400a in Fig. 5. EGR may be increased or equivalence ratio may be reduced, and intake valve closing is moderately retarded. An intake valve lift profile such as shown in trace 402 in Fig. 5 may be suitable to provide some retardation of valve closing in operating region 506. A triple or quad injection strategy may be preferred with low to moderate intake pressure boost.

Operating region 508 in Fig. 6 represents a high load region. In region 508, exhaust rebreathing is minimized. This level of rebreathing may be achieved, for example, by using an exhaust valve with a lift profile represented by profile 400a in Fig. 5. EGR is high with high intake boost and maximum intake valve closing retard. An intake valve lift profile such as shown in trace 406 in Fig. 5 may be suitable to provide the high level retardation of valve closing in operating region 508. A triple, quad, or pent injection strategy is preferred.

The operating regions 502, 504, 506, and 508 depicted in Fig. 6 do not necessarily represent distinct regions with distinct borders therebetween with corresponding distinct levels of engine control variables on either side of the borders between operating regions. For example, operation of a GDCI system is not limited to the distinct valve lift profiles depicted in Fig. 5. As engine load is increased from a low load as indicated in region 504 to a medium load as indicated in region 506, intake valve lift may be modified from a profile indicated by profile 402 in Fig. 5 to a profile indicated by profile 404 in Fig. 5 by using one or more intermediate intake valve lift profiles between profile 402 and profile 404.

While this invention has been described in terms of the preferred embodiments thereof, it is not intended to be so limited, but rather only to the extent set forth in the claims that follow.

## Claims

1. A system (10) comprising a gasoline direct injection internal combustion engine (12) having at least one cylinder (64) with direct fuel injection and containing a piston (66) reciprocally moveable within the cylinder (64) and connected to a crank; a bore wall surface of the cylinder (64), a top surface (74) of the piston (66), and a bottom surface of a cylinder head of the engine defining a variable volume combustion chamber (28); said cylinder head including an intake valve (62A) controlling communication with an air intake and an exhaust valve (62B) controlling communication with an exhaust outlet;
a means for controlling the effective compression ratio of the engine (12);
a means for controlling an amount of residual burned gas in the combustion chamber (28);
a variable valve actuating system (58) for variably actuating the intake and exhaust valves (62A, 62B) with respect to the angular position of the crank, said actuating system (58) being capable of operating the intake and exhaust valves (62A, 62B) to control intake valve closing time and exhaust rebreathing;
exhaust gas recirculation (EGR) means (42) with EGR control means (44) to reintroduce exhaust gas into the combustion chamber (28);
intake pressure boost means (50) with intake pressure boost control means (54);
fuel injection means (30) capable of multiple injections per combustion cycle and capable of distributing fuel spatially within the combustion chamber to achieve desired charge stratification as a function of engine speed and load; and
a control means (20, 22) controlling effective compression ratio, the amount of residual burned gas in the combustion chamber, EGR, number of fuel injections per combustion cycle, fuel injection timing, and boost pressure as a function of engine speed and load in a manner sufficient to enable gasoline direct injection compression ignition (GDCI) combustion of a mixture of air and a fuel having an (RON+MON)/2 value between about 75 and about 100 over the entire speed and load operating range (502, 504, 506, 508) of the engine (12) the autoignition of said air-fuel mixture being initiated spontaneously without requiring an external stimulus such as a spark from a spark plug, to initiate combustion and wherein,
fuel is injected in the range 100 crank angle degree before top dead center of a compression stroke to 10 crank angle degree after top dead center of the compression stroke.

2. The system (10) of claim 1 wherein the engine (12) has a geometric compression ratio greater than 12.

3. The system (10) of claim 1 wherein the means for controlling the effective compression ratio of the engine (12) comprises a variable valve actuating system (58) configured to variably actuate the intake valve (62A) with respect to the angular position of the crank to control intake valve closing time.

4. The system (10) of claim 1 wherein the means for controlling an amount of residual burned gas in the combustion chamber (28) comprises a variable valve actuating system (58) configured to variably actuate the exhaust valve (62B) with respect to the angular position of the crank to control exhaust rebreathing.

5. The system (10) of claim 1 wherein the means for controlling an amount of residual burned gas in the combustion chamber (28) comprises a variable valve actuating system (58) configured to variably actuate the intake valve (62A) and the exhaust valve (62B) with respect to the angular position of the crank to control negative valve overlap.

6. The system (10) of claim 1 wherein the means for controlling an amount of residual burned gas in the combustion chamber (28) comprises a variable valve actuating system (58) configured to variably actuate the intake valve (62A) and the exhaust valve (62B) with respect to the angular position of the crank to control exhaust backflow with a secondary intake event.

7. The system (10) of claim 1 wherein the top surface (74) of the piston (66) defines a bowl (72); the fuel injection means (30) is symmetrically located above the bowl (72); and the fuel injection means (30) is configured to dispense fuel (68) with a fuel spray angle (70) between 60 and 140 included degrees.

8. The system (10) of claim 1 wherein the fuel injection means (30) is configured to inject fuel at injection pressures between 100 and 500 bar.

9. The system (10) of claim 1 wherein the engine (12) further comprises a starting aid means (24) to initiate combustion in a cold engine.

10. A method for operating a gasoline direct injection internal combustion engine (12) having at least one cylinder (64) with direct fuel injection and containing a piston (66) reciprocally moveable within the cylinder (64) and connected to a crank; a bore wall surface of the cylinder (64), a top surface (74) of the piston (66), and a bottom surface of a cylinder head of the engine defining a variable volume combustion chamber (28); said cylinder head including an intake valve (62A) controlling communication with an air intake and an exhaust valve (62B) controlling communication with an exhaust outlet, the method comprising:
controlling the effective compression ratio of the engine (12);
controlling an amount of residual burned gas in the combustion chamber (28);
employing exhaust gas recirculation (EGR) means (42) with EGR control means (44) to reintroduce exhaust gas into the combustion chamber (28);
employing intake pressure boost means (50) with intake pressure boost control means (54);
employing fuel injection means (30) capable of multiple injections per combustion cycle;
distributing fuel spatially within the combustion chamber;
controlling charge stratification as a function of engine speed and load; and
controlling exhaust rebreathing, EGR, number of fuel injections per combustion cycle, fuel injection timing, and boost pressure as a function of engine speed and load in a manner sufficient to enable gasoline direct injection compression ignition (GDCI) combustion of a mixture of air and a fuel having an (RON+MON)/2 value between about 79 and about 100 in the combustion chamber (28) over the entire speed and load operating range (502, 504, 506, 508) of the engine (12) the autoignition of said air-fuel mixture being initiated spontaneously without requiring an external stimulus such as a spark from a spark plug, to initiate combustion and
injecting fuel in the range 100 crank angle degree before top dead center of a compression stroke to 10 crank angle degree after top dead center of the compression stroke.

11. The method of claim 10 wherein the step of controlling the effective compression ratio of the engine (12) comprises variably actuating the intake valve (62A) with respect to the angular position of the crank to control intake valve closing time.

12. The method of claim 10 wherein the step of controlling an amount of residual burned gas in the combustion chamber (28) comprises variably actuating the exhaust valve (62B) with respect to the angular position of the crank to control exhaust rebreathing.

13. The method of claim 10 wherein the step of controlling an amount of residual burned gas in the combustion chamber (28) comprises variably actuating the intake valve (62A) and the exhaust valve (62B) with respect to the angular position of the crank to control negative valve overlap.

14. The method of claim 10 wherein the step of controlling an amount of residual burned gas in the combustion chamber (28) comprises variably actuating the intake valve (62A) and the exhaust valve (62B) with respect to the angular position of the crank to control exhaust backflow with a secondary intake event.

15. The method of claim 10 wherein the step of controlling an amount of residual burned gas in the combustion chamber (28) comprises reducing the amount of residual burned gas in the combustion chamber when the engine load is increased.

16. The method of claim 10 wherein EGR is increased as engine load is increased.

17. The method of claim 10 wherein the number of fuel injections per combustion cycle is increased as the engine load is increased.

18. The method of claim 10 wherein the step of controlling the effective compression ratio of the engine (12) comprises decreasing the effective compression ratio with increasing engine load.

19. The method of claim 10 wherein intake boosting is increased as engine load is increased.

20. The method of claim 10 wherein when the engine is operated at low temperature and low load, residual burned gas in the combustion chamber is controlled to a high level, EGR is not provided, the intake valve is closed essentially when the piston reaches bottom dead center on an intake stroke, and no intake boosting is provided.

21. The method of claim 10 wherein fuel is injected no earlier than 90 crank angle degrees before top dead center and no later than 10 crank angle degrees after top dead center.

22. The method of claim 10 wherein fuel is injected in multiple injection events per combustion event, wherein the timing and fuel quantity of each injection are controlled to achieve start of combustion (SOC) between 10 crank angle degrees before top dead center and 15 crank angle degrees after top dead center.

## Patentansprüche

1. System (10), das aufweist einen Benzin-Direkteinspritz-Verbrennungsmotor (12), der zumindest einen Zylinder (64) mit direkter Kraftstoffeinspritzung hat und einen Kolben (66) enthält, der in dem Zylinder (64) hin- und herbewegbar ist und mit einer Kurbel verbunden ist; wobei eine Bohrungswandfläche des Zylinders (64), eine obere Fläche (74) des Kolbens (66) und eine untere Fläche eines Zylinderkopfs des Motors eine Verbrennungskammer (28) mit variablem Volumen definieren; wobei der Zylinderkopf ein Einlassventil (62A), das eine Kommunikation mit einem Lufteinlass steuert, und ein Auslassventil (62B) umfasst, das eine Kommunikation mit einem Abgasauslass steuert;
ein Mittel zum Steuern des effektiven Verdichtungsverhältnisses des Motors (12);
ein Mittel zum Steuern einer Menge von verbranntem Restgas in der Verbrennungskammer (28);
ein variables Ventilbetätigungssystem (58) zum variablen Betätigen der Einlass- und Auslassventile (62A, 62B) in Bezug auf die Winkelposition der Kurbel, wobei das Betätigungssystem (58) die Einlass- und Auslassventile (62A, 62B) betätigen kann, um eine Schließzeit des Einlassventils und ein Abgas-Rebreathing zu steuern;
Abgasrückführungs (EGR - exhaust gas recirculation)-Mittel (42) mit EGR-Steuermitteln (44) zum Wiedereinführen von Abgas in die Verbrennungskammer (28);
Einlassdruckverstärkungsmittel (50) mit Einlassdruckverstärkungssteuermitteln (54);
Kraftstoffeinspritzmittel (30), die zu mehreren Einspritzungen pro Verbrennungszyklus fähig sind und fähig sind, Kraftstoff räumlich in der Verbrennungskammer zu verteilen, um eine gewünschte Ladungsschichtung als Funktion von Motordrehzahl und Last zu erzielen; und
ein Steuermittel (20, 22) zum Steuern eines effektiven Verdichtungsverhältnisses, der Menge von verbranntem Restgas in der Verbrennungskammer, EGR, einer Anzahl von Kraftstoffeinspritzungen pro Verbrennungszyklus, des Kraftstoffeinspritzzeitpunkts und eines Ladedrucks als Funktion von Motordrehzahl und Last in einer Weise, die ausreicht, um eine Benzin-Direkteinspritz-Kompressionszündung(GDCI - gasoline direct injection compression ignition)-Verbrennung eines Gemisches aus Luft und Kraftstoff mit einem (RON + MON)/2-Wert zwischen etwa 75 und etwa 100 über den gesamten Drehzahl- und Lastbetriebsbereich (502, 504, 506, 508) des Motors (12) zu ermöglichen, wobei die Selbstzündung des Luft-Kraftstoff-Gemisches spontan initiiert wird, ohne einen externen Impuls zu erfordern, wie einen Zündfunken von einer Zündkerze, um eine Verbrennung zu initiieren, und wobei
Kraftstoff in dem Bereich von 100 Kurbelwinkelgrad vor oberem Totpunkt eines Verdichtungshubs bis 10 Kurbelwinkelgrad nach oberem Totpunkt des Verdichtungshubs eingespritzt wird.

2. Das System (10) gemäß Anspruch 1, wobei der Motor (12) ein geometrisches Verdichtungsverhältnis von mehr als 12 hat.

3. Das System (10) gemäß Anspruch 1, wobei das Mittel zum Steuern des effektiven Verdichtungsverhältnisses des Motors (12) ein variables Ventilbetätigungssystem (58) aufweist, das konfiguriert ist zum variablen Betätigen des Einlassventils (62A) in Bezug auf die Winkelposition der Kurbel, um eine Schließzeit des Einlassventils zu steuern.

4. Das System (10) gemäß Anspruch 1, wobei das Mittel zum Steuern einer Menge von verbranntem Restgas in der Verbrennungskammer (28) ein variables Ventilbetätigungssystem (58) aufweist, das konfiguriert ist zum variablen Betätigen das Auslassventils (62B) in Bezug auf die Winkelposition der Kurbel zum Steuern eines Abgas-Rebreathing.

5. Das System (10) gemäß Anspruch 1, wobei das Mittel zum Steuern einer Menge von verbranntem Restgas in der Verbrennungskammer (28) ein variables Ventilbetätigungssystem (58) aufweist, das konfiguriert ist zum variablen Betätigen des Einlassventils (62A) und des Auslassventils (62B) in Bezug auf die Winkelposition der Kurbel, um eine negative Ventilüberlappung zu steuern.

6. Das System (10) gemäß Anspruch 1, wobei das Mittel zum Steuern einer Menge von verbranntem Restgas in der Verbrennungskammer (28) ein variables Ventilbetätigungssystem (58) aufweist, das konfiguriert ist zum variablen Betätigen des Einlassventils (62A) und des Auslassventils (62B) in Bezug auf die Winkelposition der Kurbel, um einen Abgasrückstrom mit einem sekundären Einlassereignis zu steuern.

7. Das System (10) gemäß Anspruch 1, wobei die obere Fläche (74) des Kolbens (66) eine Schale (72) definiert; das Kraftstoffeinspritzmittel (30) symmetrisch über der Schale (72) angeordnet ist; und das Kraftstoffeinspritzmittel (30) konfiguriert ist zum Abgeben von Kraftstoff (68) mit einem Kraftstoffstrahlwinkel (70) zwischen 60 und 140 eingeschlossenen Grad.

8. Das System (10) gemäß Anspruch 1, wobei das Kraftstoffeinspritzmittel (30) konfiguriert ist zum Einspritzen von Kraftstoff mit Einspritzdrücken zwischen 100 und 500 bar.

9. Das System (10) gemäß Anspruch 1, wobei der Motor (12) weiter ein Starthilfemittel (24) aufweist zum Initiieren einer Verbrennung in einem kalten Motor.

10. Ein Verfahren für einen Betrieb eines Benzin-Direkteinspritz-Verbrennungsmotors (12) mit zumindest einem Zylinder (64) mit direkter Kraftstoffeinspritzung und der einen Kolben (66) enthält, der in dem Zylinder (64) hin- und herbewegbar ist und mit einer Kurbel verbunden ist; wobei eine Bohrungswandfläche des Zylinders (64), eine obere Fläche (74) des Kolbens (66) und eine untere Fläche eines Zylinderkopfs des Motors eine Verbrennungskammer (28) mit variablem Volumen definieren; wobei der Zylinderkopf ein Einlassventil (62A), das eine Kommunikation mit einem Lufteinlass steuert, und ein Auslassventil (62B) umfasst, das eine Kommunikation mit einem Abgasauslass steuert, wobei das Verfahren aufweist:
Steuern des effektiven Verdichtungsverhältnisses des Motors (12);
Steuern einer Menge von verbranntem Restgas in der Verbrennungskammer (28);
Einsetzen von Abgasrückführungs(EGR - exhaust gas recirculation)-Mitteln (42) mit EGR-Steuermitteln (44) zum Wiedereinführen von Abgas in die Verbrennungskammer (28);
Einsetzen von Einlassdruckverstärkungsmittel (50) mit Einlassdruckverstärkungssteuermitteln (54);
Einsetzen von Kraftstoffeinspritzmitteln (30), die zu mehreren Einspritzungen pro Verbrennungszyklus fähig sind;
räumliches Verteilen von Kraftstoff in der Verbrennungskammer;
Steuern einer Ladungsschichtung als Funktion von Motordrehzahl und Last; und
Steuern von Abgas-Rebreathing, EGR, einer Anzahl von Kraftstoffeinspritzungen pro Verbrennungszyklus, eines Kraftstoffeinspritzzeitpunkts und eines Ladedrucks als Funktion von Motordrehzahl und Last in einer Weise, die ausreicht, um eine Benzin-Direkteinspritz-Kompressionszündung(GDCI - gasoline direct injection compression ignition)-Verbrennung eines Gemisches aus Luft und Kraftstoff mit einem (RON + MON)/2-Wert zwischen etwa 79 und etwa 100 in der Verbrennungskammer (28) über den gesamten Drehzahl- und Lastbetriebsbereich (502, 504, 506, 508) des Motors (12) zu ermöglichen, wobei die Selbstzündung des Luft-Kraftstoff-Gemisches spontan initiiert wird, ohne einen externen Impuls zu erfordern, wie einen Zündfunken von einer Zündkerze, um eine Verbrennung zu initiieren, und
Einspritzen von Kraftstoff in dem Bereich von 100 Kurbelwinkelgrad vor oberem Totpunkt eines Verdichtungshubs bis 10 Kurbelwinkelgrad nach oberem Totpunkt des Verdichtungshubs.

11. Das Verfahren gemäß Anspruch 10, wobei der Schritt des Steuerns des effektiven Verdichtungsverhältnisses des Motors (12) ein variables Betätigen des Einlassventils (62A) in Bezug auf die Winkelposition der Kurbel aufweist, um eine Schließzeit des Einlassventils zu steuern.

12. Das Verfahren gemäß Anspruch 10, wobei der Schritt des Steuerns einer Menge von verbranntem Restgas in der Verbrennungskammer (28) ein variables Betätigen des Auslassventils (62B) in Bezug auf die Winkelposition der Kurbel aufweist, um ein Abgas-Rebreathing zu steuern.

13. Das Verfahren gemäß Anspruch 10, wobei der Schritt des Steuerns einer Menge von verbranntem Restgas in der Verbrennungskammer (28) ein variables Betätigen des Einlassventils (62A) und des Auslassventils (62B) in Bezug auf die Winkelposition der Kurbel aufweist, um eine negative Ventilüberlappung zu steuern.

14. Das Verfahren gemäß Anspruch 10, wobei der Schritt des Steuerns einer Menge von verbranntem Restgas in der Verbrennungskammer (28) ein variables Betätigen des Einlassventils (62A) und des Auslassventils (62B) in Bezug auf die Winkelposition der Kurbel aufweist, um einen Abgasrückstrom mit einem sekundären Einlassereignis zu steuern.

15. Das Verfahren gemäß Anspruch 10, wobei der Schritt des Steuerns einer Menge von verbranntem Restgas in der Verbrennungskammer (28) ein Reduzieren der Menge von verbranntem Restgas in der Verbrennungskammer aufweist, wenn die Motorlast erhöht wird.

16. Das Verfahren gemäß Anspruch 10, wobei EGR erhöht wird, wenn die Motorlast erhöht wird.

17. Das Verfahren gemäß Anspruch 10, wobei die Anzahl von Kraftstoffeinspritzungen pro Verbrennungszyklus erhöht wird, wenn die Motorlast erhöht wird.

18. Das Verfahren gemäß Anspruch 10, wobei der Schritt des Steuerns des effektiven Verdichtungsverhältnisses des Motors (12) ein Verringern des effektiven Verdichtungsverhältnisses mit zunehmender Motorlast aufweist.

19. Das Verfahren gemäß Anspruch 10, wobei ein Einlassverstärkung erhöht wird, wenn die Motorlast erhöht wird.

20. Das Verfahren gemäß Anspruch 10, wobei, wenn der Motor bei niedriger Temperatur und niedriger Last betrieben wird, verbranntes Restgas in der Verbrennungskammer auf einen hohen Pegel gesteuert wird, keine EGR vorgesehen ist, das Einlassventil im Wesentlichen geschlossen ist, wenn der Kolben den unteren Totpunkt erreicht bei einem Einlasshub, und keine Einlassverstärkung vorgesehen wird.

21. Das Verfahren gemäß Anspruch 10, wobei Kraftstoff nicht früher als 90 Kurbelwinkelgrade vor dem oberen Totpunkt und nicht später als 10 Kurbelwinkelgrade nach dem oberen Totpunkt eingespritzt wird.

22. Das Verfahren gemäß Anspruch 10, wobei Kraftstoff in mehreren Einspritzereignissen pro Verbrennungsereignis eingespritzt wird, wobei der Zeitpunkt und die Kraftstoffmenge jeder Einspritzung gesteuert werden, um einen Verbrennungsbeginn (SOC - start of combustion) zwischen 10 Kurbelwinkelgraden vor dem oberen Totpunkt und 15 Kurbelwinkelgraden nach dem oberen Totpunkt zu erreichen.

## Revendications

1. Système (10) comprenant un moteur à essence à combustion interne avec injection directe (12) ayant au moins un cylindre (64) avec injection directe du carburant et contenant un piston (66) qui se déplace en va-et-vient à l'intérieur du cylindre (64) et qui est connecté à une bielle ; une surface de paroi d'alésage du cylindre (64), une surface supérieure (74) du piston (66), et une surface inférieure d'une culasse du moteur définissant une chambre de combustion (28) à volume variable ; ladite culasse incluant une soupape d'admission (62A) qui commande la communication avec une admission d'air et une soupape d'échappement (62B) qui commande la communication avec une sortie d'échappement ;
un moyen pour commander le rapport de compression efficace du moteur (12) ;
un moyen pour commander une quantité de gaz brûlés résiduels dans la chambre de combustion (28) ;
un système d'actionnement de soupape variable (58) pour actionner de manière variable les soupapes d'admission et les soupapes d'échappement (62A, 62B) par rapport à la position angulaire de la bielle, ledit système d'actionnement (58) étant capable de faire fonctionner les soupapes d'admission et les soupapes d'échappement (62A, 62B) pour commander le temps de fermeture des soupapes d'admission et la réinspiration à l'échappement ;
un moyen de recyclage de gaz d'échappement (EGR) (42) avec un moyen de commande EGR (44) afin de réintroduire des gaz d'échappement dans la chambre de combustion (28) ;
un moyen d'amplification de pression d'admission (50) avec un moyen de commande d'amplification de pression d'admission (54) ;
un moyen d'injection de carburant (30) capable d'effectuer une multiplicité d'injections par cycle de combustion et capable de distribuer le carburant dans l'espace à l'intérieur de la chambre de combustion pour atteindre une stratification de charge désirée en fonction de la vitesse et de la charge du moteur ; et
un moyen de commande (20, 22) qui commande le rapport de compression efficace, la quantité de gaz brûlés résiduels dans la chambre de combustion, le recyclage des gaz d'échappement, le nombre d'injections de carburant par cycle de combustion, la temporisation d'injection du carburant, et la pression d'amplification en fonction de la vitesse et de la charge du moteur d'une manière suffisante pour permettre une combustion de l'essence par allumage sous compression d'injection directe (GDCI) d'un mélange d'air et de carburant ayant une valeur (RON + MON)/2 entre environ 75 et environ 100 sur la totalité de la plage fonctionnelle de vitesse de charge (502, 504, 506, 508) du moteur (12), l'auto-allumage dudit mélange air/carburant étend amorcé spontanément sans requérir un stimulus externe comme une étincelle provenant d'une bougie, pour amorcer la combustion, et dans lequel
le carburant est injecté dans la plage d'un angle de vilebrequin à 100 degrés avant le point mort haut d'une course de compression jusqu'à un angle de vilebrequin à 10 degrés après le point mort haut de la course de compression.

2. Système (10) selon la revendication 1, dans lequel le moteur (12) a un rapport de compression géométrique supérieur à 12.

3. Système (10) selon la revendication 1, dans lequel le moyen pour commander le rapport de compression efficace du moteur (12) comprend un système d'actionnement de soupape variable (58) configuré pour actionner de manière variable la soupape d'admission (62A) par rapport à la position angulaire de la bielle pour commander le temps de fermeture de la soupape d'admission.

4. Système (10) selon la revendication 1, dans lequel le moyen pour commander une quantité de gaz brûlés résiduels dans la chambre de combustion (28) comprend un système d'actionnement de soupape variable (58) configuré pour actionner de manière variable la soupape d'échappement (62B) par rapport à la position angulaire de la bielle pour commander la réinspiration à l'échappement.

5. Système (10) selon la revendication 1, dans lequel le moyen pour commander une quantité de gaz brûlés résiduels dans la chambre de combustion (28) comprend un système d'actionnement de soupape variable (58) configuré pour actionner de façon variable la soupape d'admission (62A) et la soupape d'échappement (62B) par rapport à la position angulaire de la bielle afin de commander un chevauchement négatif des soupapes.

6. Système (10) selon la revendication 1, dans lequel le moyen pour commander une quantité de gaz brûlés résiduels dans la chambre de combustion (28) comprend un système d'actionnement de soupape variable (58) configuré pour actionner de manière variable la soupape d'admission (62A) et la soupape d'échappement (62B) par rapport à la position angulaire de la bielle afin de commander le reflux à l'échappement avec un événement d'admission secondaire.

7. Système (10) selon la revendication 1, dans lequel la surface supérieure (74) du piston (66) définit un bol (72) ; le moyen d'injection de carburant (30) est placé de manière symétrique au-dessus du bol (72) et le moyen d'injection de carburant (30) est configuré pour distribuer le carburant (68) avec un angle de pulvérisation du carburant (70) inclut entre 60 et 140 degrés.

8. Système (10) selon la revendication 1, dans lequel le moyen d'injection de carburant (30) est configuré pour injecter le carburant à des pressions d'injection entre 100 et 500 bars.

9. Système (10) selon la revendication 1, dans lequel le moteur (12) comprend en outre un moyen d'assistance au démarrage (24) pour amorcer la combustion dans un moteur froid.

10. Procédé pour le fonctionnement d'un moteur à essence à combustion interne avec injection directe (12) ayant au moins un cylindre (64) avec injection directe du carburant et contenant un piston (66) mobile en va-et-vient à l'intérieur du cylindre (64) et connecté à une bielle ; une surface de paroi d'alésage du cylindre (64), une surface supérieure (74) du piston (66), et une surface inférieure d'une culasse du moteur définissant une chambre de combustion à volume variable (28) ; ladite culasse incluant une soupape d'admission (62A) qui commande la communication avec une admission d'air et une soupape d'échappement (62B) qui commande la communication avec une sortie d'échappement, le procédé comprenant les étapes consistant à :
commander le rapport de compression efficace du moteur (12) ;
commander une quantité de gaz brûlés résiduels dans la chambre de combustion (28) ;
employer un moyen de recirculation des gaz d'échappement (EGR) (42) avec un moyen de commande EGR (44) pour réintroduire des gaz d'échappement dans la chambre de combustion (28) ;
employer un moyen d'amplification de pression d'admission (50) avec un moyen de commande d'amplification de pression d'admission (54) ;
employer un moyen d'injection de carburant (30) capable d'une multiplicité d'injections par cycle de combustion ;
distribuer le combustible dans l'espace à l'intérieur de la chambre de combustion ;
commander la stratification de charge en tant que fonction de la vitesse et de la charge du moteur ; et
commander la réinspiration à l'échappement, le recyclage des gaz d'échappement, le nombre d'injections de carburant par cycle de combustion, la temporisation d'injection du carburant, et la pression d'amplification en fonction de la vitesse et de la charge du moteur d'une manière suffisante pour rendre possible une combustion de l'essence par allumage sous compression avec injection directe (GDCI) d'un mélange d'air et de carburant ayant une valeur (RON + MON)/2 entre environ 79 et environ 100 dans la chambre de combustion (28) sur la totalité de la plage de fonctionnement de vitesse et de charge (502, 504, 506, 508) du moteur (12), l'auto allumage dudit mélange air/carburant étant amorcé spontanément sans requérir un stimulus externe comme une étincelle provenant d'une bougie, pour amorcer la combustion et
injecter le carburant dans la plage depuis un angle de bielle à 100 degrés avant le point mort haut d'une course de compression jusqu'à un angle de bielle à 10 degrés après le point mort haut de la course de compression.

11. Procédé selon la revendication 10, dans lequel l'étape consistant à commander le rapport de compression efficace du moteur (12) comprend l'opération consistant actionner de manière variable la soupape d'admission (62A) par rapport à la position angulaire de la bielle afin de commander le temps de fermeture de la soupape d'admission.

12. Procédé selon la revendication 10 dans lequel l'étape consistant à commander une quantité de gaz brûlés résiduels dans la chambre de combustion (28) comprend l'opération consistant à actionner de manière variable la soupape d'échappement (62B) par rapport à la position angulaire de la bielle afin de commander la réinspiration à l'échappement.

13. Procédé selon la revendication 10, dans lequel l'étape consistant à commander une quantité de gaz brûlés résiduels dans la chambre de combustion (28) comprend l'opération consistant à actionner de manière variable la soupape d'admission (62A) et la soupape d'échappement (62B) par rapport à la position angulaire de la bielle afin de commander un chevauchement négatif des soupapes.

14. Procédé selon la revendication 10, dans lequel l'étape consistant à commander une quantité de gaz brûlés résiduels dans la chambre de combustion (28) comprend l'opération consistant à actionner de manière variable la soupape d'admission (62A) et la soupape d'échappement (62B) par rapport à la position angulaire de la bielle afin de commander le reflux à l'échappement avec un événement d'admission secondaire.

15. Procédé selon la revendication 10, dans lequel l'étape consistant à commander une quantité de gaz brûlés résiduels dans la chambre de combustion (28) comprend une réduction de la quantité de gaz brûlés résiduels dans la chambre de combustion quand la charge du moteur est augmentée.

16. Procédé selon la revendication 10 dans lequel la quantité de gaz d'échappement recyclés est augmentée lorsque la charge du moteur est augmentée.

17. Procédé selon la revendication 10, dans lequel le nombre d'injections de carburant par cycle de combustion est augmenté lorsque la charge du moteur est augmentée.

18. Procédé selon la revendication 10, dans lequel l'étape consistant à commander le rapport de compression efficace du moteur (12) comprend l'opération consistant à diminuer le taux de compression efficace lorsque la charge du moteur augmente.

19. Procédé selon la revendication 10, dans lequel l'amplification à l'admission est augmentée lorsque la charge du moteur est augmentée.

20. Procédé selon la revendication 10, dans lequel, quand le moteur est amené à fonctionner à basse température et à faible charge, les gaz brûlés résiduels dans la chambre de combustion sont commandés à un niveau élevé, le recyclage des gaz d'échappement n'est pas assuré, la soupape d'admission est fermée essentiellement quand le piston atteint le point mort bas sur une course d'admission, et il n'est prévu aucune amplification à l'admission.

21. Procédé selon la revendication 10, dans lequel le carburant n'est injecté pas plus tôt qu'à un angle de bielle à 90 degrés avant le point mort haut et pas plus tard qu'à un angle de bielle à 10 degrés après le point mort haut.

22. Procédé selon la revendication 10, dans lequel le carburant est injecté suivant une multiplicité d'événements d'injection pour chaque événement de combustion, dans lequel la temporisation et la quantité de carburant de chaque injection sont commandées pour assurer un départ de la combustion (SOC) entre un angle de bielle à 10 degrés avant le point mort haut et un angle de bielle à 15 degrés après le point mort haut.
